# EUROPEAN PATENT APPLICATION

(11) **EP 1 400 298 A2**
(43) Date of publication of application: **24.03.2004**
(21) Application number: 03020390.5
(22) Date of filing: 10.09.2003
(51) Int. Cl.: B23D 45/04

(54) **Miter saw arrangement for increased cutting capacity**

(30) Priority: 17.09.2002 US 245439
(71) Applicant: Black & Decker Inc., Newark Delaware 19711 (US)
(72) Inventor: Wattenbach, Brian P., Columbia Maryland 21044 (US)
(74) Representative: Bell, Ian Stephen

(57) **Abstract**

A miter saw (10) includes a base (11), a table (12) rotatably attached to the base (11), a saw assembly (20) connected to the table (12), the saw assembly (20) comprising a motor (21), a blade (22) rotatable about an axis (A), an upper blade guard (24) for covering an upper part of the blade (22) and having a bottom surface (24S), and a housing (23) connected to the upper blade guard (24), the housing (23) having a bottom surface (23S) disposed below the axis (A), wherein a first distance (D1') between the axis (A) and the bottom surface of the housing (23) and/or the upper blade guard (24) at a first point (X) along the axis (A) near the upper blade guard (24) is smaller than a second distance (D2') between the axis (A) and the bottom surface of the housing (23) and/or the upper blade guard (24) at a second point (Y) along the axis (A), the second point (Y) being farther away from the upper blade guard (24) than the first point (X).

## Description

This invention relates generally to miter saws and specifically to arrangements for increasing cutting capacity in slide and/or non-sliding miter saws.

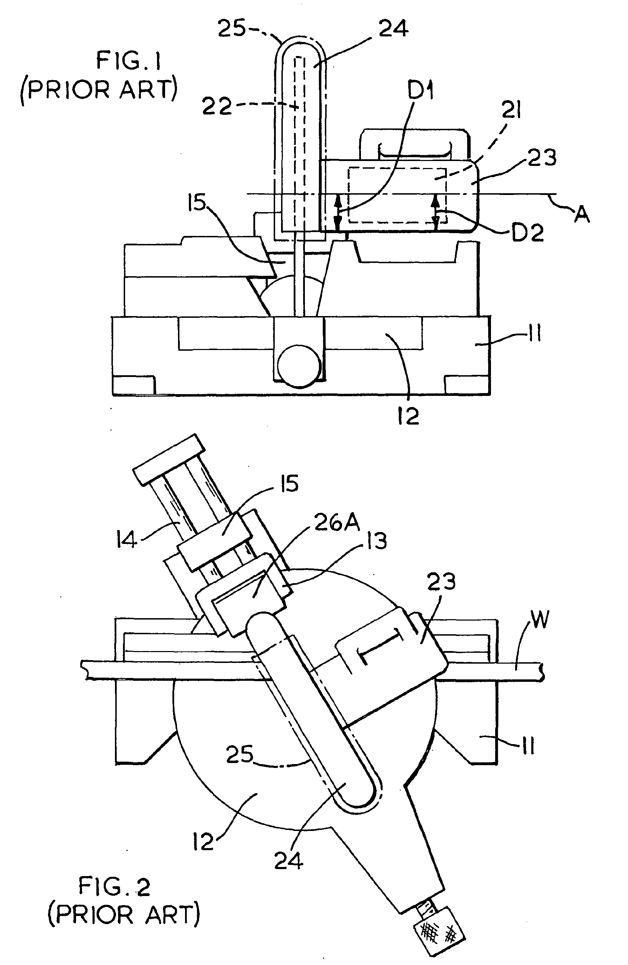

Slide miter saws are well known in the art as they provide extended cutting range over non-sliding miter saws. Referring to FIG. 1, non-sliding and slide miter saws both have a base 11, a rotatable table 12 attached to the base 11, a saw assembly 20 including a motor 21, a blade 22 rotatable about axis A and driven by the motor 21, a cover housing 23 covering motor 21, an upper blade guard 24 covering the upper part of blade 22, and a lower guard 25 (shown in broken lines) pivotably attached to upper blade guard 24 for covering the lower part of blade 21. Accordingly, the saw assembly 20 is pivoted downwardly for cutting a workpiece disposed on the base 11 and table 12.

In addition, slide miter saws enable the user to move the saw assembly horizontally along the table. As shown in FIG. 2, most slide miter saws accomplish this by connecting the upper blade guard 24 (and thus the saw assembly 20) to a pivot arm, which in turn is connected to a trunnion 13, which is fixedly connected to at least one rail 14, which is slidably attached to a support housing 15 connected to the table 12 (see, e.g., US Patent No. 6,067,885). With such arrangement, the user would pull the saw assembly 20 forwardly, move the saw assembly 20 downwardly, then push the saw assembly 20 rearwardly for cutting the workpiece W.

This typical arrangement has been found to limit cutting capacity of the miter saw. This is because the cover housing 23 contacts the workpiece W, thus stopping the chopping movement. In particular, it has been found that the distance D1 between axis A and the bottom surface of cover housing 23 near upper blade guard 24 is equal to or larger than the distance D2 between axis A and the bottom surface of cover housing 23 at a point farther away from upper blade guard 24.

In accordance with the present invention, an improved miter saw is employed. The miter saw includes a base, a table rotatably attached to the base, a saw assembly connected to the table, the saw assembly comprising a motor, a blade rotatable about an axis and driven by the motor, an upper blade guard for covering an upper part of the blade and having a bottom surface, and a housing connected to the upper blade guard, the housing having a bottom surface disposed below the axis, wherein a first distance between the axis and the bottom surface of at least one of the housing and the upper blade guard at a first point along the axis near the upper blade guard is smaller than a second distance between the axis and the bottom surface of at least one of the housing and the upper blade guard at a second point along the axis, the second point being farther away from the upper blade guard than the first point.

Additional features and benefits of the present invention are described, and will be apparent from, the accompanying drawings and the detailed description below.

The accompanying drawings illustrate preferred embodiments of the invention according to the practical application of the principles thereof, and in which:
FIG. 1 is a front view of a prior art slide miter saw;
FIG. 2 is a top view of the prior art slide miter saw of FIG. 1;
FIG. 3 is a front view of a slide miter saw according to the invention;
FIG. 4 is a top view of the slide miter saw of FIG. 1; and
FIG. 5 is a partial cross-sectional view along line V-V of FIG. 4.

The invention is now described with reference to the accompanying figures, wherein like numerals designate like parts. Persons skilled in the art should understand that, while the invention is being explained in terms of a slide miter saw, the invention is also applicable to non-sliding miter saws.

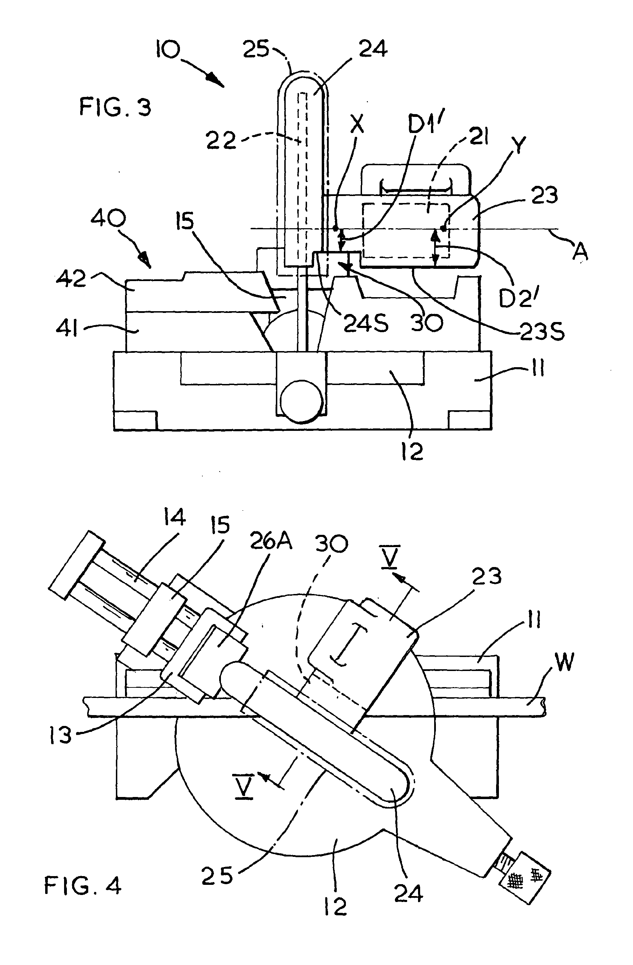

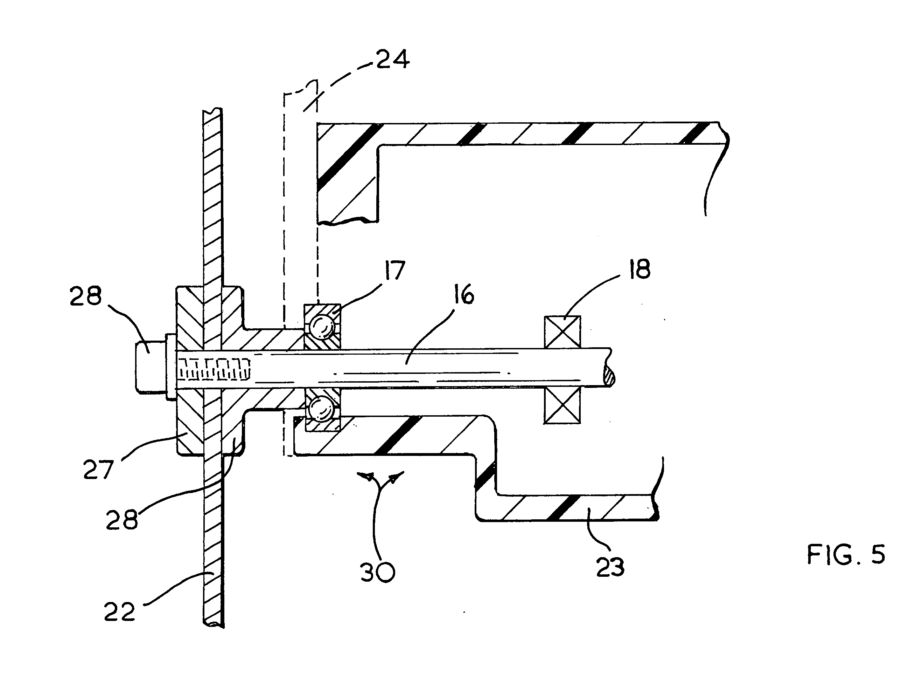

Referring to FIGS. 3-5, a slide miter saw 10 preferably has a base 11, a table 12 rotatably connected to the base 11, a support housing 15 pivotally connected to table 12, at least one (and preferably two) rail(s) 14 slidably connected to the support housing 15, a trunnion 13 attached to one end of the rail(s) 15, and a saw assembly 20 which comprises a pivot arm 26A pivotably attached to trunnion 13, a motor 21, a blade 22 rotatable about axis A and driven by the motor 21, an upper blade guard 24 for covering an upper part of blade 22, and a lower blade 25 pivotally attached to the upper blade guard 24 for covering a lower part of blade 22. Preferably the motor 21 is attached to the upper blade guard 17. These elements are well known in the art. Persons skilled in the art are referred to US Patent No. 6,067,885, which is wholly incorporated by reference herein.

The slide miter saw 10 may also have a movable fence assembly 40 attached to the base 11. Movable fence assembly 40 preferably extends laterally across table 12, against which a workpiece can be positioned and supported for performing a cutting operation thereon. Movable fence assembly 40 may include a fixed fence 41 attached to base 11, and a movable fence 42 connected to the fixed fence 41. Preferably, movable fence 42 is slidably attached to fixed fence 41. Persons skilled in the art are referred to US Patent Nos. 5,297,463 and 5,943,931, which are wholly incorporated by reference herein.

Motor 21 may be covered by a cover housing 23 attached to the upper blade guard 24. Cover housing 23 may cover motor 21 and/or any transmissions disposed between the motor 21 and blade 22. Cover housing 23 may have a lower or bottom surface 23S, which is preferably below the axis A. Similarly, upper blade guard 24 may have a lower or bottom surface 24S, which may be below axis A.

Preferably, blade 22 is mounted on a spindle 16, which extends into cover housing 23, and is driven by motor 21. Spindle 16 may be supported by bearings 17, 18. Blade 22 may be clamped unto spindle 16 via clamps 26, 27 disposed on both sides of blade 22, and held in place by a bolt 28, which is preferably threaded into spindle 16.

It is desirable to shape the volume underneath spindle 16 to maximize cutting capacity. Accordingly, a pocket 30 may be created by manipulating the distances between axis A and bottom surfaces 23S and/or 24S. In particular, it is desirable to ensure that wherein the distance D1' between axis A and the bottom surface 23S and/or 24S at point X along axis A near the upper blade guard 24 is smaller than the distance D2' between axis A and the bottom surface 23S and/or 24S at point Y along axis A. Preferably, point Y is farther away from the upper blade guard 24 than point X. In addition, points X and Y are disposed along axis A on the same side of blade 22.

By manipulating distances in such manner, pocket 30 is created. Preferably, the height and width of pocket 30 is about 3.33 inches and about 1.744 inches, respectively, for a miter saw that carries a blade with a diameter of about 8.5 inches. With such arrangement, a user could cut a 3 ¼" base molding placed vertically against fence assembly 40 at a miter angle of about 42° to about 48°. Such cut is achieved when the saw assembly 20 is placed near the fence and moved downwardly in a chopping action, rather than sliding it across the workpiece.

Persons skilled in the art will recognize that the size and shape of pocket 30 can be modified according to design requirements and specifications, etc.

Persons skilled in the art may recognize other additions or alternatives to the means disclosed herein. However, all these additions and/or alterations are considered to be equivalents of the present invention.

## Claims

1. A miter saw comprising:
a base;
a table rotatably attached to the base;
a saw assembly connected to the table, the saw assembly comprising a motor, a blade rotatable about an axis and driven by the motor, an upper blade guard for covering an upper part of the blade and having a bottom surface, and a housing connected to the upper blade guard, the housing having a bottom surface disposed below the axis;
wherein a first distance between the axis and the bottom surface of at least one of the housing and the upper blade guard at a first point along the axis near the upper blade guard is smaller than a second distance between the axis and the bottom surface of at least one of the housing and the upper blade guard at a second point along the axis, the second point being farther away from the upper blade guard than the first point.

2. The miter saw of Claim 1, wherein the blade has first and second sides, and the first and second points are disposed on the axis on the same side of the blade.

3. The miter saw of Claim 1, wherein the housing covers the motor.

4. The miter saw of Claim 1, wherein the saw assembly further comprises a spindle supporting the blade.

5. The miter saw of Claim 4, wherein the housing partly covers the spindle.

6. The miter saw of Claim 1, wherein the saw assembly is connected to the table via a support housing pivotally connected to the table.

7. The miter saw of Claim 6, further comprising at least one rail slidably connected to the support housing.

8. The miter saw of Claim 7, further comprising a trunnion fixedly attached on the at least one rail.

9. The miter saw of Claim 8, wherein the saw assembly is pivotally connected to the trunnion.

10. The miter saw of Claim 1, wherein the housing defines a pocket underneath the spindle.
